# EUROPEAN PATENT SPECIFICATION

(11) **EP 1 968 232 B1**
(45) Date of publication and mention of the grant of the patent: **27.09.2017**
(21) Application number: 05846073.4
(22) Date of filing: 28.12.2005
(51) Int. Cl.: H04L 12/701, H04L 12/18, H04Q 11/00, H04L 12/761

(54) **A CONNECTION CONTROLLING METHOD AND MEANS USED TO THE MULTICAST SERVICE IN THE AUTOMATIC SWITCHED OPTICAL NETWORK**
VERBINDUNGSSTEUERUNGSVERFAHREN UND MITTEL ZUM MULTICAST-DIENST IM AUTOMATISCH VERMITTELTEN OPTISCHEN NETZ
PROCEDE ET DISPOSITIF DE COMMANDE DE CONNEXION UTILISES DANS UN SERVICE DE MULTIDIFFUSION D'UN RESEAU OPTIQUE A COMMUTATION AUTOMATIQUE

(43) Date of publication of application: 10.09.2008
(73) Proprietor: ZTE Corporation, Shenzhen, Guangdong 518057 (CN)
(72) Inventor: SUN, Desheng, Guangdong 518057 (CN)
(74) Representative: V.O.
(86) International application number: PCT/CN2005/002339
(87) International publication number: WO 2007/073618

(56) References cited:
- CN-A- 1 430 392
- CN-A- 1 620 033
- CN-A- 1 630 268
- JP-A- 2005 175 609
- US-B1- 6 169 741
- "Architecture for the automatically switched optical network (ASON); G.8080/Y.1304 (11/01)", ITU-T STANDARD, INTERNATIONAL TELECOMMUNICATION UNION, GENEVA ; CH, no. G.8080/Y.1304 (11/01), 29 November 2001 (2001-11-29), pages 1-48, XP017463424, [retrieved on 2002-08-27]
- SREENATH N ET AL: "Virtual source based multicast routing in WDM optical networks", NETWORKS, 2000. (ICON 2000). PROCEEDINGS. IEEE INTERNATIONAL CONFERENC E ON SEPTEMBER 5-8, 2000, PISCATAWAY, NJ, USA,IEEE, 5 September 2000 (2000-09-05), pages 385-389, XP010514130, ISBN: 978-0-7695-0777-4

## Description

### TECHNICAL FIELD OF THE INVENTION

The present invention relates to the optical communication field, specifically, to multicast technique in the automatic switched optical network.

### BACKGROUND OF THE INVENTION

In the telecommunication field, optical network, such as OTN (Optical transport network), WDM (Wavelength-division multiplexing), SDH (Synchronous digital hierarchy), or SONET (Synchronous optical network) transmission network, has been used widely. With various optical network transmission techniques developing rapidly, the optical transmission network will gradually turn to the service network providing various intelligent services from the past basic network providing only connections, thus generating the automatic switched optical network (ASON). ASON is the automatic switched transport network based on the synchronous digital hierarchy (SDH) and the optical transport network (OTN), and is a new type network capable to accomplish network connection automatically. ASON is formed by three planes of control plane (CP), transport plane and managing plane, wherein the control plane technique is the core, which accomplishes the automatic switch and the connection control by configuring special control planes.

On the other hand, the internet service which increases rapidly has facilitated the demand on the multicast service. The multicast technique is a point-to-multipoint telecommunication technique which is an information transfer mode for transferring the information from a sending end to multiple receiving ends simultaneously by the telecommunication network. With the optical network technique developing continuously, the multicast service has become an important service mode increasingly. Common multicast service modes include IPTV, video conferencing, etc. In the packet-based network, the multicast technique has been used widely, but since the service configuration of the traditional optical network commonly relies on a manual manner which consumes time and labor and easy to make a mistake, it is difficult to realize the multicast technique in the optical network which is based on circuits or wavelengths. With the appearance of the ASON network, the multicast technique has been determined as the demand to realize the ASON, but the recommended standard associated with current ASON, such as, ITU-TG. 7713 which recommends the realization frame of distributed calls and connections in the ASON network, which provides the realization criterion for automatically establishing, modifying and deleting of calls and connections, fails to provide a detail realization method.

It is noted that the document entitled "Architecture for the automatically switched optical network (ASON)"; G. 8080/x.1304 (11 /01)', ITU-T STANDARD, INTERNATIONAL TELECOMMUNICATION UNION GENEVA; CH, no. G.8080/Y.1304 (11/01), 29 November 2001 (2001-11-29), pages 1-48, XP017463424), discloses a reference architecture for the control plane of the Automatically Switched Optical Network wherein key functional components and interactions between them are described.

### SUMMARY OF THE INVENTION

The object of the present invention is to solve the problem that current ASON network cannot provide multicast services. Specifically, in view of the connection control, the present invention provides a strategy to realize multicast services on ASON network.

Based on the frame structure of the ASON network, the present invention divides the multicast connection of one sending end to multiple receiving ends into multiple point-to-point connections, which realizes the connection control of multicast services by establishing, modifying and deleting of multiple point-to-point connections. This is achieved by the independent and the dependent claims.

According to an aspect of the present invention, the method of establishing the multicast service connection comprises: sending the request for establishing multicast services from the connection controller of a multicast service sending end; generating a route inquiry request based on the multicast service sending end and all of multicast service receiving ends in the establishing multicast services request, and identifying the service type of the request as a multicast; sending the route inquiry request to the route controller; inquiring the routing database according to the route inquiry request on the route controller, and acquiring the multicast route inquiry result; transferring the multicast route inquiry result to the connection controller; and establishing the connections of the multicast service sending end to each of multiple service receiving ends in turn according to the inquired multicast route inquiry result.

In a preferred embodiment of the present invention, the routing database is inquired in terms of the principle that the multicast service should share connection resources to the greatest extent.

In a preferred embodiment of the present invention, establishing the connections of the multicast service sending end to each of multiple service receiving ends in turn may comprise assigning a call ID for the received establishing multicast service request, performing a call negotiate with other call controllers in the automatic switched optical network based on the call ID, the connection controller assigning a connection ID for each of the connections based on the call ID, each of the connections being identified as multicast attribution, thereby realizing managing different connections respectively based on a call ID.

In a preferred embodiment of the present invention, after establishing the multicast service connections, the method further comprises monitoring whether each of the multicast connections has been established successfully, if all the connections have been established successfully, sending the information that the establishing of the multicast service connections has succeeded to the multicast service sending end; if the establishing of at least one connections failed, determining whether the successfully establishing of part of connections is allowed by the multicast service connection control strategy; if the successfully establishing of part of connections is allowed, sending the information that the establishing of part of the multicast service connections has succeeded to the multicast service sending end; if the successfully establishing of part of connections is not allowed, sending the information that the establishing of the multicast service connections has failed to the multicast service sending end, and eliminating the connections which have been established successfully.

According to another aspect of the present invention, the method of increasing the multicast service receiving ends comprises: sending the request for increasing the multicast service receiving ends from the multicast service sending end to a connection controller; generating the multicast service connection route inquiry request according to the multicast service sending end and all the multicast service receiving ends in the request for increasing multicast service receiving ends, and identifying the service type of the request as multicast; sending the multicast service connection route inquiry request to the route controller; inquiring the routing database according to the multicast service connection route inquiry request on the route controller to acquire the multicast route inquiry result; transferring the multicast route inquiry result to the connection controller; and establishing the connections of the multicast service sending end to each of the increased multicast service receiving ends in turn, according to the inquired multicast route inquiry results.

In a preferred embodiment of the present invention, the routing database is inquired in terms of the principle that the primary multicast connection route is not affected and the connection to the increased receiving ends should share the existing multicast tree resource to the greatest extent.

In a preferred embodiment of the present invention, the method further comprises performing call negotiation with other call controllers in the automatic switched optical network based on the call ID of the established multicast service, and assigning a connection ID for each increased connection based on the call ID, wherein each connection is identified as multicast attribution, thereby realizing managing different connections respectively based on a call ID.

In a preferred embodiment of the present invention, the method further comprises monitoring whether each of the increased connections has been established successfully; if all the connections have been established successfully, sending the information that increasing multicast service receiving ends has succeeded to the multicast service sending end; if at least one connections failed, determining whether the successfully establishing of part of the connections is allowed according to the multicast service connection control strategy; if the successfully establishing of part of the connections is allowed, sending the information that increasing of part of the multicast service receiving ends has succeeded to the multicast service sending end; if the successfully establishing of part of the connections is not allowed, sending the information that increasing of the multicast service receiving ends has failed to the multicast service sending end, and eliminating the increased connections which have been established successfully.

According to another aspect of the present invention, the method of deleting the multicast service receiving ends may comprise: sending the request for deleting the multicast service receiving ends from the multicast service sending end to a connection controller; according to the request for deleting the multicast service receiving ends, in terms of the principle that the normal running of the primary multicast connection is not affected, the deleting process of each connection to be deleted will be started in turn.

In a preferred embodiment of the present invention, the method further comprises monitoring whether each connection to be deleted has been deleted successfully; if all the connections have been deleted successfully, sending the information that deleting multicast service receiving ends has succeeded to the multicast service sending end; if at least one deleting connection failed, determining whether the successfully deleting of part of the connections is allowed according to the multicast service connection control strategy; if the successfully deleting of part of the connections is allowed, sending the information that deleting of part of the multicast service receiving ends has succeeded to the multicast service sending end; otherwise, sending the information that deleting of multicast service receiving ends has failed to the multicast service sending end, and reestablishing the deleted connection.

In another aspect of the present invention, there is provided a connection control device for the multicast service connection on the ASON network. The connection control device comprises a multicast service request receiving unit for receiving the request for establishing a multicast service; a multicast route inquiry request generating unit for generating a multicast route inquiry request; a sending unit for sending the multicast route inquiry request; a receiving unit for receiving multicast route inquiry results; and a connection control unit for establishing connections of the multicast service sending end to each of multiple multicast service receiving ends in turn according to the received multicast route inquiry results.

The connection control device may further comprises an assigning unit for assigning a call ID for a establishing multicast service request; and a call control unit for performing call negotiates with other call control units in ASON based on the call ID.

After the call negotiates having succeeded, the assigning unit distributes a connection ID for each of connections based on the call ID, and each of connections is identified as multicast attribution, thereby realizing the separate connection management of each receiving end in the multicast service.

The connection control device further comprises a monitoring unit for monitoring whether the connections of the multicast service sending end to each of multiple multicast service receiving ends has been established successfully. According to the monitoring results, the connection control unit performs the corresponding steps described in the above method of establishing the multicast service.

In another aspect of the present invention, there is provided a connection control device for the multicast service connection on the ASON network, the connection control device comprises a multicast service request receiving unit for receiving the request for increasing multicast service receiving ends; a multicast route inquiry request generating unit for generating a multicast route inquiry request; a sending unit for sending the multicast route inquiry request; a receiving unit for receiving the multicast route inquiry results; and a connection control unit for establishing the connections of the multicast service sending end to each of at least one of the increased multicast service receiving ends in turn according to the received multicast route inquiry results.

The connection control device may further comprises a call control unit for performing call negotiates with other call control units in ASON based on the call ID of the multicast service.

The connection control device may further comprises an assigning unit for assigning a connection ID for each of the connections based on the call ID after the call negotiates having succeeded, and each of the connections is identified as multicast attribution, thereby realizing the separate connection management of each receiving end in the multicast service.

The connection control device may further comprises a monitoring unit for monitoring whether the connections of the multicast service sending end to each of the increased multicast service receiving ends have been established successfully. According to the monitoring results, the connection control unit performs the corresponding steps described in the above method of increasing multicast service receiving ends.

In another aspect of the present invention, there is provided a connection control device for the multicast service connection on the ASON network, the connection control device comprises a multicast service request receiving unit for receiving the request for deleting multicast service receiving ends; and a connection control unit for deleting the connections of the multicast service sending end to each of at least one of multicast service receiving ends to be deleted in turn.

The connection control device may further comprises a monitoring unit for monitoring whether the connections of the multicast service sending end to each of at least one of multicast service receiving ends to be deleted have been deleted successfully. According to the monitoring results, the connection control unit performs the corresponding steps described in the above method of deleting multicast service receiving ends.

In another aspect of the present invention, there is provided a route selecting device for the multicast service connection on the ASON network, the route selecting device comprises a receiving unit for receiving a multicast route inquiry request; a inquiry unit for inquiring a routing database; and a sending unit for sending multicast route inquiry results.

When establishing the multicast service connection, the route selecting device inquires the routing database in terms of the principle that the multicast service share connection resources to the greatest extent.

When increasing the multicast service receiving ends, the route selecting device inquires the routing database in terms of the principle that the primary multicast connection route is not affected and the connections to the increased each of at least one multicast service receiving end share the existing multicast tree resource to the greatest extent.

From the above technique steps, the present inventions solve the problems of establishment, modification and deletion of the multicast service connections supported by ASON network by means of adopting the processing method of dividing a complicated multicast service connection control problem into multiple point-to-point connections, which have the advantage of concision and security.

### BRIEF DESCRIPTION OF THE DRAWINGS

The features and advantages of the present invention will become more apparent in the following description of embodiments of the invention taken in conjunction with the accompanying drawings, wherein like reference numbers refer to the same corresponding parts, in which:
Fig. 1 illustrates the multicast service supported on the ASON network;
Fig. 2 illustrates the control plane of the ASON network nodes according to a preferred embodiment of the present invention;
Fig. 3 is the flowchart of the method for establishing the multicast service connection on the ASON network according to a preferred embodiment of the present invention;
Fig. 4 illustrates the tree diagram of the acquired ASON network multicast route according to a preferred embodiment of the invention;
Fig. 5 is the flowchart of the method for increasing the multicast receiving ends on the ASON network according to a preferred embodiment of the invention;
Fig. 6 illustrates the tree diagram of the multicast route of the acquired increasing multicast service receiving ends on the ASON network according to a preferred embodiment of the invention;
Fig. 7 illustrates the multicast connections after increasing the service receiving ends on the ASON network according to a preferred embodiment of the invention;
Fig. 8 is the flowchart of the method for deleting the multicast receiving ends on the ASON network according to a preferred embodiment of the invention;
Fig. 9 illustrates the multicast connections after deleting the multicast service receiving ends on the ASON network according to a preferred embodiment of the invention;
Fig. 10a, 10b, 10c are the block diagrams of the connection control device for the multicast service connection on the ASON network according to a preferred embodiment of the invention; and
Fig. 11 is the block diagram of the route selecting device for the multicast service connection on the ASON network according to a preferred embodiment of the invention.

### DETAILED DESCRIPTION OF THE INVENTION

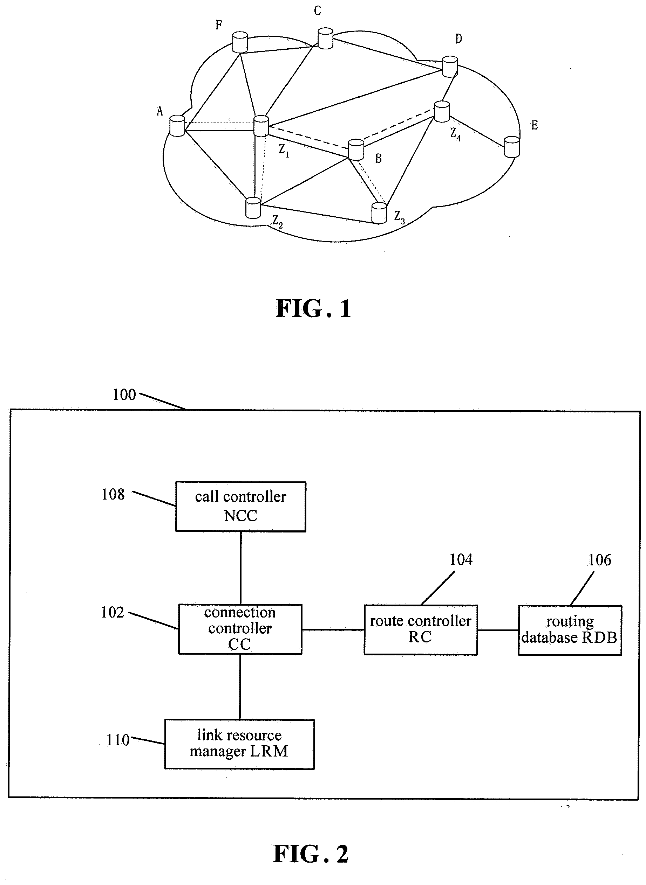

The invention will be described in detail in connection with the accompanying drawings. Firstly reference to Fig. 1, which illustrates the multicast service supported on the ASON network. In Fig. 1, A, B...F, Z1...Z4 are the ASON network nodes, wherein A is the sending end of the multicast service such as IPTV, video conferencing, etc, and Z1, Z2, ... Z4 are the receiving ends of the multicast service.

Fig. 2 illustrates the control plane of the ASON network nodes according to a preferred embodiment of the invention. From Fig. 2, ASON network nodes 100, such as A, B...F, Z1...Z4 in Fig. 1, may comprise: a connection controller 102, a route controller 104, a routing database 106, a call controller 108, a link resource manager 110 etc, wherein the link resource manager 110 manages the bottom link, the connection controller 102 takes charge of coordinating the link resource manager, the route controller and the other quits and dependent connection controllers, managing and monitoring the establishment of the connections, releasing and modifying the connection parameter of the existing connections. The route controller 104 provides the route information for establishing connection which could be end-to-end (e.g., source route) and could also be hop-by-hop in response to the request from the connection controller. The call controller 108 controls the call, wherein the call controller of the calling end interacts with the call controller of the called end by one or more intermediate call controllers. The routing database 106 comprises the topological structure of the whole network, from which the route of any one source node to other target nodes in the network could be generated. In other embodiments of the present invention, the routing database 106 is not necessary to exist on each ASON network node, which could only exist on one or more nodes on the ASON network.

Hereinafter, the method of establishing the multicast connection on the ASON network according to a preferred embodiment of the present invention will be described with reference to Fig.1, Fig.3 and Fig.4, wherein the ASON network node A is the sending end of the multicast service, Z1, Z2, ...Z4 are the receiving ends of the multicast service.

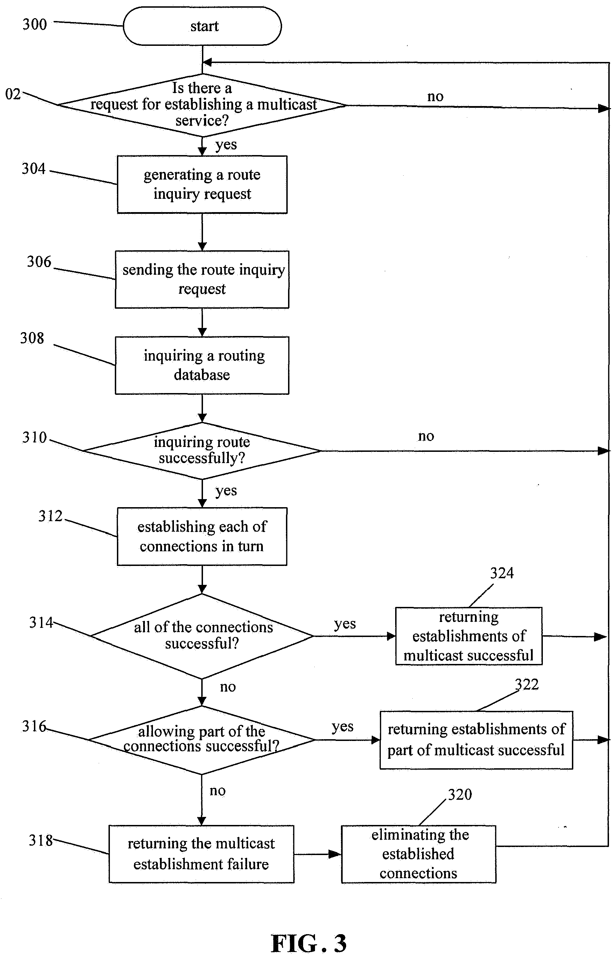

Figs. 3 is the flowchart of the method for establishing the multicast service connection on the ASON network according to a preferred embodiment of the present invention. As shown in Figs. 3, the process of establishing the multicast service connection on the ASON network starts from step 300. At step 302, the connection controller (CCA) of the ASON network node A monitors the request for establishing the multicast service of node A. If the ASON network supports a calling, the connection controller at the ASON network edge side entrance monitors the request for establishing the multicast service connection from the call controller of the multicast service sending end. In a preferred embodiment, the request for establishing the multicast service comprises the sending end (A, in this embodiment) of the multicast service and one or more receiving ends (Z1, Z2, Z3 and Z4, in this embodiment). After receiving the request of establishing the multicast service, the process proceeds to step 304.

At step 304, the connection controller of node A generates the route inquiry request for the multicast connection according to that the sending end requested by the multicast service is A and the receiving ends are Z1, Z2, Z3 and Z4. In the request, the service type is identified as the multicast service and sent to the route controller (RC) at step 306.

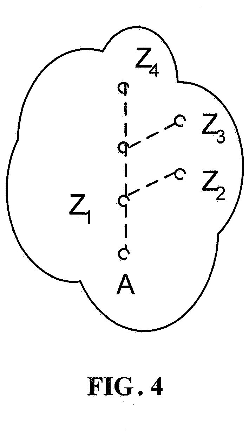

At step 308, according to the request, the RC inquires the routing database (RDB) in terms of the principle that the multicast service should share connection resources to the greatest extent. With the shortest path priority algorithm used commonly currently, all the routes of the service sending end to each of service receiving ends are searched, and the route meeting the requirement is selected from these paths in the principle that share connection resources to the greatest extent. It should be noted that the inquiry method of the present invention is not limited to the above scheme, the route inquiry could be performed by various route inquiry methods known by ordinary skill in the art, as long as the route inquiry could satisfy that the routes of the sending end to each of receiving ends could share connection resources to the greatest extent and the path is shortest. For example, the route of A-Z1 could be searched first, and several routes of A-Z1, A-Z2-Z1, A-F-Z1, etc are acquired; the route of A-Z2 is searched then, and routes of A-Z2, A-Z1-Z2, etc are acquired; the route of A-Z3 is searched, and routes of A- Z1-B-Z3, A-Z2-Z3, A-Z1-Z2-Z3, etc are acquired; the route of A-Z4 is searched, and routes of A- Z1-B-Z4, A-Z2-Z3-Z4, A-F-Z5-D-Z4, etc are acquired. Based on the above results, the results matching, elimination are performed in terms of the principle that the multicast service should share connection resources to the greatest extent, and final routes are acquired: route from A to Z1 selects A-Z1; route from A to Z2 selects A-Z1-Z2; route from A to Z3 selects A- Z1-B-Z3; route from A to Z4 selects A-Z1-B-Z4. According to these results, as shown in Fig. 4, the tree diagram of route results of Z1, Z2, Z3 and Z4 sharing resources between A-Z1, Z3 and Z4 and Z1-B are acquired.

At step 310, determine that whether the routing database inquiry of step 308 has succeeded. If succeeded, the process proceeds to step 312, otherwise the process returns to step 302, continue to monitor the request for establishing the multicast service.

At step 312, CCA transfers the connection establishment problem of the sending end A and four receiving endings Z1, Z2, Z3 and Z4 into four point-to-point connections of A-Z1, A-Z2, A-Z3 and A-Z4 according to received inquired routing results as shown in Fig. 4, and start the establishment process of each connection in turn. These connections distinguish with the normal end-to end connection by increasing multicast attributions. In the preferred embodiment of the invention, when received the call of establishing multicast service, a call ID could be distributed for the call. Then, the call negotiate was performed based on the call ID and other call controllers in the ASON network, after succeeded in the call negotiate, a connection ID is distributed for each connection based on the call ID when starting each connection in turn" each connection is identified as the multicast attribution. Respective connection has a common "father". Each connection has a respective connection ID, thereby a corresponding connection control could be performed for each connection based on the call.

At step 314, CCA determines whether all connections have been established successfully. If yes, at step 314, the information that the multicast service connection has succeeded is returned to the sending end (node A) of the multicast service, and returns to step 302. If at least one connection establishment has failed, for example, in the four connections of A-Z1, A-Z 2, A-Z3 and A-Z4 which are established at step 312, only A-Z1, A-Z2 have succeeded, determines whether the successfully establishing of part of the connections is allowed according to the multicast service connection control strategy at step 316. If the successfully establishing of part of the connections is not allowed, sends the information that the establishing of the multicast service connections has failed to the multicast service sending end at step 318, and eliminates each connection established at step 320, and returns to step 302. Otherwise, CCA returns the information that the connection establishment from A to receiving ends Z1, Z2 has succeeded to the multicast service sending end, then returns to step 302. The thick dotted line in Fig 1 shows the connection schematic diagram after establishing multicast service connections (from A to Z1, Z2...Z4) on ASON network according to the preferred embodiment of the invention.

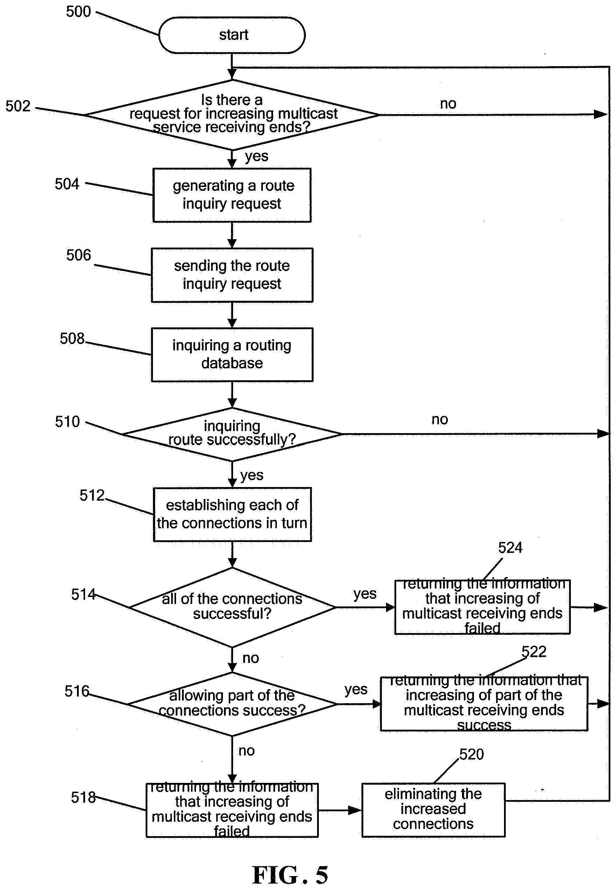

Hereinafter, according to the preferred embodiment of the invention, the method for increasing multicast receiving ends on ASON network is described by reference to Fig 5 to Fig 7. Here, supposing that A is the sending end, Z1 to Z5 are primary receiving ends, Z5 is the new increased receiving end.

Figs. 5 is the flowchart of the method for increasing the multicast receiving ends on the ASON network according to the preferred embodiment of the invention. As shown in Fig 5, the process begins with step 500, at step 502, CCA monitors increasing multicast service receiving end requests of node A. If ASON network supports the call, the connection controller located at the edge entrance of ASON network monitors increasing multicast service receiving ends requests passed by the call controller of the multicast service sending end. In the preferred embodiment, the increased multicast service receiving end request comprises the sending end of multicast service (A in this embodiment,) and one or more increased receiving ends (Z5 in this embodiment,). When received the increased receiving end requests, the process proceeds to step 504.

At step 504, CCA generates the route inquiry request for the multicast connection according to that the sending end of multicast service is A and the receiving end is Z5. In the request, the service type is identified as the multicast service, and sent to the route controller RC at step 506.

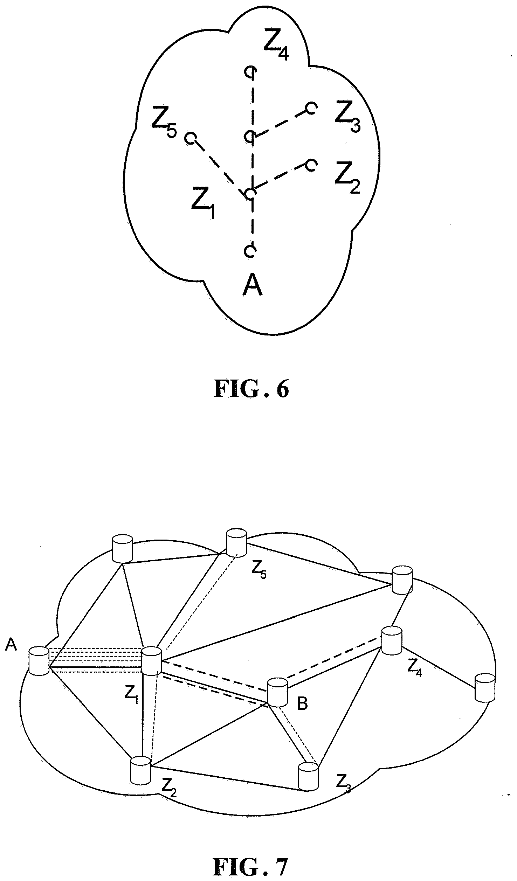

At step 508, the RC inquires the routing database according to the request. The inquiry is based on the principle of not influencing the primary multicast connections and the increased connections and the primary connections share the connection resource to the greatest extent. The inquiry could be performed according to the above route inquiry method. In the preferred embodiment of the present invention, for example, the route of A-Z5 could be searched first, and A-F-Z5, A-Z1-Z5, etc are acquired. Based on the result, A-Z1-Z5 is chose on principle that not influence primary multicast connections A-Z1, A-Z2, A-Z3 and A-Z4 and the new increased receiving end Z5 share the existing multicast tree resource (for example, the aim could be achieved by matching the new searching result A-Z1, A-Z2, A-Z3 and A-Z4 with the primary routes respectively) to the greatest extent, resulting the route results of increasing new embranchments on basis of the primary multicast tree, as shown in Fig 6.

At step 510, determines whether the database inquiry of step 508 is successful. If yes, the process proceeds to step 512, otherwise the process returns to step 502, keeping on monitoring the increased multicast service receiving end requests.

At step 512, CCA starts the connection to Z5 according to the inquired route results shown in Fig 6 (distributes the connection ID and establishes the corresponding connection), and the attribution of the connection is identified as multicast attribution so as to distinguish from normal end-to-end connections.

At step 514, CCA determines whether all the increased connections have been established successfully. It should be noted, although the embodiment provides only the case of increasing one receiving end, at least one receiving ends could be increased at the same time. If all the connections have been established successfully, the information that increasing the multicast service receiving ends has succeeded is returned to the sending end (node A) of the multicast service at step 524, and return to step 502. If at least one connection establishment has failed, determine whether the successfully establishing of part of the connections is allowed according to the multicast service connection control strategy at step 516. If the successfully establishing of part of the connections is not allowed, return the information that increasing of the multicast service receiving ends has failed to the multicast service sending end at step 518, and eleminates the new increased each connection which has been established at step 520, and return to step 502. Otherwise, CCA returns the information that the establishing of connections from A to partly increased receiving ends have succeeded to the multicast service sending end, then returns to step 502. The thick dotted line in Fig 7 shows the multicast connections after increasing the receiving end Z5 on ASON network according to the preferred embodiment of the present invention.

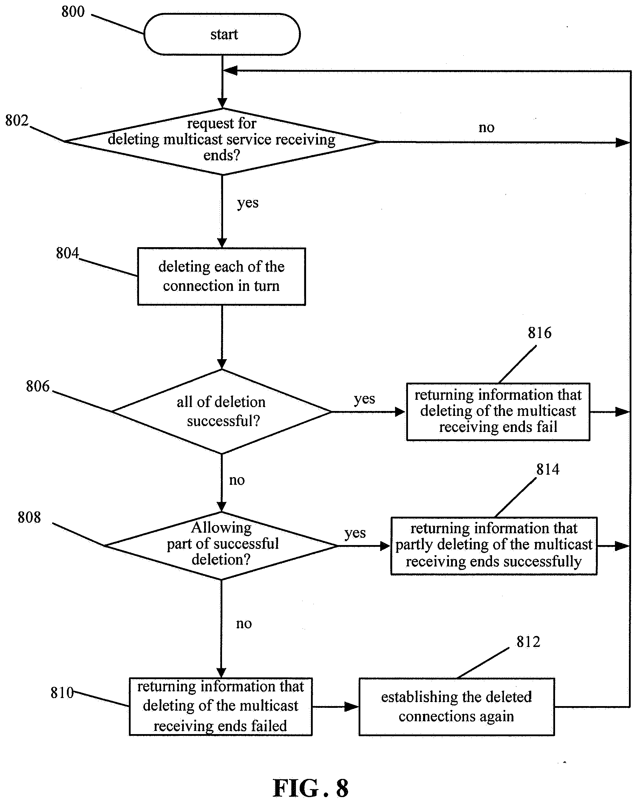

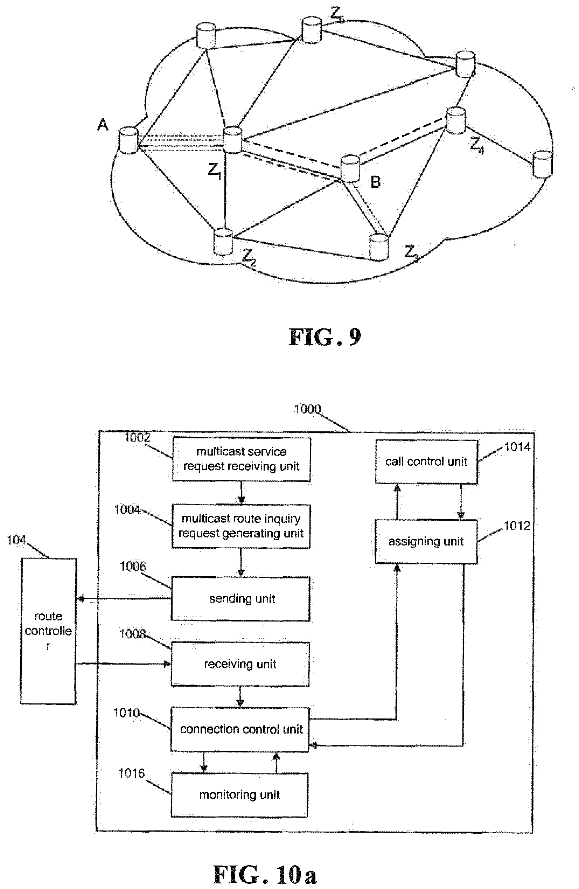

Hereinafter, according to the preferred embodiment of the present invention, the method for deleting multicast receiving ends on ASON network is described by reference to Fig 8 and Fig 9. Here, supposing that A is the sending end, Z1, Z2, Z3, Z4 and Z5 are primary receiving ends, and Z2, Z5 are the receiving ends to be deleted.

Fig 8 is the flowchart of the method for deleting the multicast receiving ends on the ASON network according to the preferred embodiment of the present invention. As shown in Fig 8, the process begins at step 800, at step 802, CCA monitors deleting multicast service receiving end requests of node A. If the ASON network supports the call, the connection controller located at the edge entrance of the ASON network monitors deleting multicast service receiving end requests passed by the call controller of the multicast service sending end. In the preferred embodiment, deleting multicast service receiving end requests comprises the sending end of multicast service (in this case, A) and one or more receiving ends to be deleted (in this case, Z2 and Z5). When received deleting receiving ends requests, the process proceeds to step 804.

At step 804, CCA starts the delete process of A-Z2, A-Z5 in turn without influence on the normal work of primary multicast connections A and Z1, Z3, Z4.

At step 806, CCA determines whether all the connections to be deleted have been deleted successfully. If all the connections have been deleted successfully, the information that deleting the multicast service receiving ends has succeeded is returned to the sending end (node A) of the multicast service at step 816, and return to step 802. If at least one connection delete has failed (for example, deleting Z5 is successful, deleting Z2 is failed), determine whether the successfully deleting of part of the connections is allowed according to the multicast service connection control strategy at step 808. If the successfully deleting of part of the connections is not allowed, return the information that deleting of the multicast service receiving ends has failed to the multicast service sending end at step 810, and reestablish the deleted each connection at step 812 (in this case, reestablishes the connection from A to Z5), and return to step 802. Otherwise, CCA returns the information that the deleting of part of multicast service receiving ends has succeeded (for example, deleting Z5 is successful) to the multicast service sending end at step 814, then return to step 802. The thick dotted line in Fig 9 shows the multicast connection schematic diagram after deleting receiving ends Z2, Z5 on ASON network according to the preferred embodiment of the present invention.

Figs 10a is the block diagram of the connection control device for the multicast service connection on the ASON network according to a preferred embodiment of the present invention. As shown in Fig 10a, the connection control device 1000 comprises a multicast service request receiving unit 1002 for receiving the request for establishing the multicast service, in the preferred embodiment of the present invention, the request for establishing the multicast service comprises the multicast service sending end and multiple multicast service receiving ends, for example, comprises node A and nodes Z1, Z2, Z3, Z4; a multicast route inquiry request generating unit 1004 for generating the multicast route inquiry request according to the multicast service sending end and the multiple multicast service receiving end in the request; a sending unit 1006 for sending the multicast route inquiry request; a receiving unit 1008 for receiving the multicast route inquiry results; and a connection control unit 1010 for establishing the connection of the multicast service sending end to each of multiple multicast service receiving ends in turn according to the received multicast route inquiry results.

In the preferred embodiment of the present invention, the connection control device 1000 may further comprise an assigning unit 1012 for assigning a call ID for establishing multicast service request; and a call control unit 1014 for performing call negotiates with other call control units in ASON based on the call ID. After the call negotiates having succeeded, the assigning unit 1012 distributes a connection ID for each connection based on the call ID, and each connection is identified as multicast attribution, thereby realizing the separate connection management in each receiving end in the multicast service. The connection control device 1000 may further comprise a monitoring unit 1016 for monitoring whether the connection of the multicast service sending end to each of multiple multicast service receiving ends has been established successfully. If the monitoring unit 1016 monitors that the establishing of part of the connections has failed, the connection control unit 1010 determines whether the successfully establishing of part of the connections is allowed according to the multicast service connection control strategy; if the successfully establishing of part of the connections is allowed, the connection control unit 1010 sends the information that the establishing part of the multicast service connection has succeeded to the multicast service sending end; if the successfully establishing of part of the connections is not allowed, the connection control unit 1010 sends the information that the establishing of the multicast service connection has failed to the multicast service sending end, and eliminates the connection which has been established successfully.

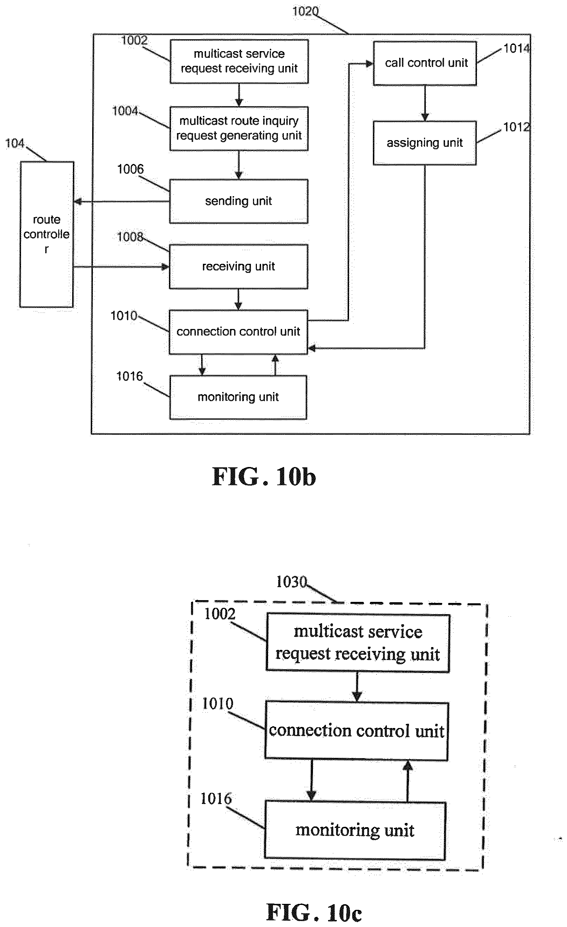

Figs 10b is the block diagram of the connection control device for the multicast service connection on the ASON network according to a preferred embodiment of the present invention. As shown in Fig 10b, the connection control device 1020 comprises a multicast service request receiving unit 1002 for receiving the request for increasing multicast service receiving ends (such as, increasing receiving end Z5) in the preferred embodiment of the present invention, the request for increasing multicast service receiving ends comprises the multicast service sending end and the increased at least one multicast service receiving ends, for example, comprises node A and node Z5; a multicast route inquiry request generating unit 1004 for generating the multicast route inquiry request according to the multicast service sending end and the increased at least one multicast service receiving ends in the request for increasing multicast service receiving ends; a sending unit 1006 for sending the multicast route inquiry request to the route choosing device; a receiving unit 1008 for receiving the multicast route inquiry results; and a connection control unit 1010 for establishing the connections of the multicast service sending end to the increased at least one multicast service receiving ends in turn according to the received multicast route inquiry results.

In the preferred embodiment of the present invention, the connection control device 1020 may further comprise a call control unit 1014 for performing call negotiates with other call control units in ASON based on the call ID. The connection control device 1020 may further comprise an assigning unit 1012 for assigning a connection ID for each connection based on the call ID after the call negotiates having succeeded, and each connection is identified as multicast attribution, thereby realizing the separate connection management in each receiving end in the multicast service. The connection control device 1020 may further comprise a monitoring unit 1016 for monitoring whether the connection of the multicast service sending end to increased at least one multicast service receiving ends have been established successfully. If the monitoring unit 1016 monitors that all the connections have been established successfully, the connection control unit 1010 sends the information that increasing the multicast service receiving ends have succeeded to the multicast service sending end. If the monitoring unit 1016 monitors that the establishing of part of the connections has failed, the connection control unit 1010 determines whether the the successfully establishing of part of the connections are allowed according to the multicast service connection control strategy; if the successfully establishing of part of the connections is allowed, the connection control unit 1010 sends the information that increasing of part of the multicast service receiving ends has succeeded to the multicast service sending end; if the successfully establishing of part of the connections is not allowed, the connection control unit 1010 sends the information that increasing of multicast service receiving ends has failed to the multicast service sending end, and eliminates the connections which have been established successfully.

Figs 10c is the block diagram of the connection control device for the multicast service connection on the ASON network according to a preferred embodiment of the present invention. As shown in Fig 10c, the connection control device 1030 comprises a multicast service request receiving unit 1002 for receiving the request for deleting multicast service receiving ends (such as, deleting receiving ends Z2, Z5), in the preferred embodiment of the present invention, the request for deleting multicast service receiving ends comprises the multicast service sending end and at least one multicast service receiving ends to be deleted, for example, comprises node A and node Z2, Z5; a connection control unit 1010 for deleting the connections of the multicast service sending end to the at least one multicast service receiving ends to be deleted in turn.

In the preferred embodiment of the present invention, the connection control device 1030 may further comprise a monitoring unit 1016 for monitoring whether the connections of the multicast service sending end to the at least one multicast service receiving ends to be deleted have been deleted successfully. If it is monitored that all the connections have been deleted successfully, the connection control unit 1010 sends the information that deleting the multicast service receiving ends have succeeded to the multicast service sending end. If it is monitored that deleting part of connections have failed, the connection control unit 1010 determines whether the successfully deleting of part of the connections is allowed according to the multicast service connection control strategy; if the successfully establishing of part of the connections is allowed, the connection control unit 1010 sends the information that deleting of part of the multicast service receiving ends has succeeded to the multicast service sending end; if the successfully deleting of part of the connections is not allowed, the connection control unit 1010 sends the information that deleting of multicast service receiving ends have failed to the multicast service sending end, and reestablishes the connections which have been deleted.

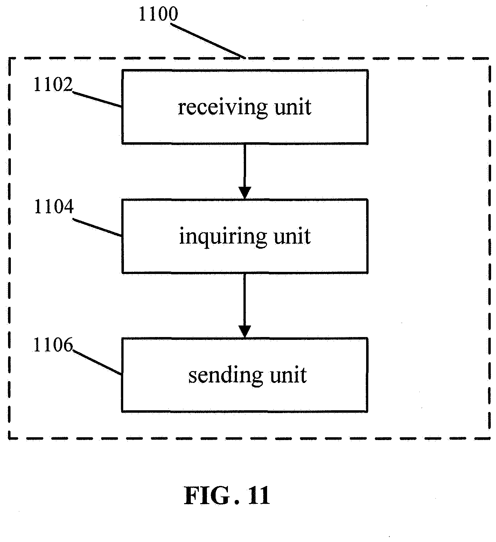

Fig. 11 is the block diagram of the route selecting device for the multicast service connections on the ASON network according to a preferred embodiment of the present invention. As shown in Fig 11, the route selecting device 1100 for the multicast service connections on the ASON comprises a receiving unit 1102 for receiving the multicast route inquiry request; an inquiry unit 1104 for inquiring the routing database to obtain the multicast route inquiry results; and a sending unit 1106 for sending the multicast route inquiry results.
In the preferred embodiment of the present invention, when establishing the multicast service, as described above, the route selecting device 1100 inquires the routing database in terms of the principle that the multicast service should share connection resources to the greatest extent. When increasing the multicast service receiving ends, the route selecting device 1100 inquires the routing database in terms of the principle that the primary multicast connection route is not affected and the connections to each of the increased at least one multicast service receiving ends should share the existing multicast tree resources to the greatest extent.

It should be noted that, the above embodiments are given with the aim of illumination and description. It is not exhaustive, or meant to make these embodiments limited to the disclosed exact form. There can be other variations, modifications, and alternatives. Therefore, the above description and illustrations should not be taken as limiting the scope of the present invention which is defined by the appended claims.

## Claims

1. A method for establishing multicast service connections or for increasing multicast service receiving ends in an automatic switched optical network, the method comprising the steps of:
sending (300, 500) a request for establishing a multicast service for a plurality of multicast service receiving ends (Z1-Z4) or for increasing at least one multicast service receiving end (Z5), respectively from a multicast service sending end (A) to a connection controller (102);
generating (304, 504) a multicast route inquiry request according to the multicast service sending end (A) and the plurality of multicast service receiving ends (Z1-Z4) in the request for establishing the multicast service or according to the multicast service sending end and the increased at least one multicast service receiving ends in the request for increasing at least one multicast service receiving end (Z5), respectively, the multicast route inquiry request comprising the multicast service sending end (A) and either the plurality of multicast service receiving ends (Z1-Z4) or the increased at least one multicast service receiving end (Z5), respectively, and the service type of the request being identified as multicast;
sending (306, 506) the multicast route inquiry request to a route controller (104);
inquiring (308, 508) a routing database (106) according to the multicast route inquiry request on the route controller to acquire multicast route inquiry results;
transferring the multicast route inquiry results to the connection controller (102); and
establishing (312, 512), by the connection controller (102), connections of the multicast service sending end to each of the plurality of multicast service receiving ends (Z1-Z4) or to each of the increased at least one multicast service receiving ends (Z5), respectively, in turn according to the inquired multicast route inquiry results,
wherein the step of inquiring (308, 508) the routing database (106) comprises inquiring the routing database in terms of the principle that the multicast service should share connection resources; if the step of inquiring the routing database failed, sending the fail information to the connection controller (102); wherein the step of inquiring (308, 508) the routing database comprising inquiring the routing database in terms of the principle that the connection to at least one increased receiving end should share an existing multicast tree resource.

2. The method according to claim 1, wherein the call controller (108) of the multicast service sending end (A) performs the step of sending the request for establishing the multicast service or for increasing multicast service receiving end, respectively, from the multicast service sending end to the connection controller (102).

3. The method according to claim 1, wherein the step of establishing (312, 512) the connections of the multicast service sending end to each of the plurality of multicast service receiving ends (Z1-Z4) or of the at least one increased multicast service receiving end (Z5), respectively, in turn comprising:
performing call negotiation with other call controllers in the automatic switched optical network based on the call ID of the established multicast service, and
assigning a connection ID for each of the connections or for each of the at least one increased connection, respectively, based on the call ID after the call negotiates succeeded, wherein each of the connections are identified as multicast attribution.

4. The method according to claim 3, wherein the step of establishing (312, 512) connections of the multicast service sending end to each of the plurality of multicast service receiving ends (Z1-Z4) in turn comprising:
assigning a call ID for the request for establishing the multicast service.

5. The method according to claim 1, further comprising the steps of:
monitoring (314, 514) whether the connections of the multicast service sending end to the plurality of multicast service receiving ends (Z1-Z4) or to the increased at least one multicast service receiving end (Z5), respectively, have been established successfully;
if all of the connections have been established successfully, sending (324, 524) the information that the multicast service connection establishment or increasing the multicast service receiving ends, respectively, has succeeded to the multicast service sending end (A);
if part of the connections have failed to be established, determining (316, 516) whether part of successful connections are allowed according to the multicast service connection control strategy;
if part of successful connections are allowed, sending (322, 522) the information that the establishing of part of the connections or increasing of part of the multicast service receiving ends, respectively, has succeeded to the multicast service sending end;
if the successfully establishing of part of the connections are not allowed:
sending (318, 518) the information that the multicast service connection establishment or increasing the multicast service receiving ends, respectively, has failed to the multicast service sending end, and
eliminating (320, 520) the connections which have been established successfully.

6. A method according to claim 1, the method further comprising:
sending (800) a request for deleting at least one multicast service receiving ends (Z2, Z5) from a multicast service sending end (A) to a connection controller (102); and
starting (804) the deletion of the connections of the multicast service sending end to each of the at least one multicast service receiving ends to be deleted in turn according to the request for deleting the at least one multicast service receiving ends (Z2, Z5), in terms of the principle that the normal operation of a primary multicast service connection is not affected.

7. The method according to claim 6, wherein the call controller (108) of the multicast service sending end (A) performs the step of sending the request for deleting multicast service receiving ends from a multicast service sending end to the connection controller (102).

8. The method according to claim 6, further comprising the steps of:
monitoring (806) whether the connections of the multicast service sending end (A) to the at least one multicast service receiving ends (Z2, Z5) to be deleted have been deleted successfully;
if all of the connections have been deleted successfully, sending (816) an information that deletion of the multicast service receiving ends has succeeded to the multicast service sending end;
if at least one of the deletion failed, determining (808) whether the part of successful deletion is allowed according to the multicast service connection control strategy;
if the part of successful deletion is allowed, sending (814) the information that deletion of part of the multicast service receiving ends has succeeded to the multicast service sending end;
if the deletion of part of the connections is not allowed:
sending (810) the information that the deletion of the multicast service receiving ends has failed to the multicast service sending end, and
reestablishing (812) the connections which has been deleted.

9. A connection controller for multicast service connections in automatic switched optical network, the device comprising:
a multicast service request receiving unit (1002) for receiving a request for establishing a multicast service, the request for establishing the multicast service comprising a multicast service sending end (A) and a plurality of multicast service receiving ends (Z1-Z4), or for receiving a request for increasing multicast service receiving ends, the request for increasing multicast service receiving ends comprising a multicast service sending end and at least one multicast service receiving ends (Z5);
a multicast route inquiry request generating unit (1004) for generating a multicast route inquiry request according to the multicast service sending end and the plurality of multicast service receiving ends in the request for establishing the multicast service or according to the multicast service sending end and the increased at least one multicast service receiving ends in the request for increasing multicast service receiving ends;
a sending unit (1006) for sending the multicast route inquiry request to a route controller (104), wherein the route controller (104) inquiring the routing database in terms of the principle that the multicast service should share connection resources, if the route controller inquiring the routing database failed, sending the fail information to the connection controller and wherein the route controller inquiring the routing database in terms of the principle that the connection to at least one increased receiving end should share an existing multicast tree resource;
a receiving unit (1008) for receiving multicast route inquiry results from the route controller (104); and
a connection control unit (1010) for establishing the connections of the multicast service sending end to each of the multiple multicast service receiving ends (Z1-Z4) or through each of the increased at least one multicast service receiving ends (Z5), respectively, in turn according to the inquired multicast route inquiry results.

10. The connection controller according to claim 9, further comprising:
an assigning unit (1012) for assigning a call ID for the request for establishing the multicast service; and
a call control unit (1014) for performing call negotiates with other call control units in automatic switched optical network based on the call ID.

11. The connection controller according to claim 10, wherein the assigning unit (1012) is further used for assigning a connection ID for each of connections based on the call ID after the call negotiates having succeeded, where each of the connections is identified as multicast attribution.

12. The connection controller according to claim 9, further comprising a monitoring unit (1016) for monitoring whether the connections of the multicast service sending end to each of the plurality of multicast service receiving ends have been established successfully; wherein if the monitoring unit has monitored that establishments of all of the connections have succeeded, the connection control unit sending the information that the multicast service connection establishment has succeeded to the multicast service sending end.

13. The connection controller according to claim 9, wherein if the monitoring unit (1016) has monitored that part of establishments of the connections failed, the connection control unit determining whether part of the successful connections are allowed according to the multicast service connection control strategy;
if the successfully establishing of part of the connections are allowed, the connection control unit sending the information that the establishment of part of the multicast service connections or that increasing of part of the multicast service receiving ends, respectively, has succeeded to the multicast service sending end;
if the successfully establishing of part of the connections are not allowed:
the connection control unit sending the information that the establishment of multicast service connections or that increasing of the multicast service receiving ends, respectively, has failed to the multicast service sending end, and
eliminating the connections which have been established successfully.

14. A connection controller according to claim 9, further comprising:
a multicast service request receiving unit (1002) for receiving a request for deleting multicast service receiving ends, the request for deleting multicast service receiving ends comprising a multicast service sending end (A) and at least one multicast service receiving ends to be deleted (Z2, Z5); and
a connection control unit (1010) for deleting the connections of the multicast service sending end to each of the at least one multicast service receiving ends (Z2, Z5) to be deleted in turn.

15. The connection controller according to claim 14, further comprising a monitoring unit (1016) for monitoring whether the connections of the multicast service sending end to each of the at least one multicast service receiving ends (Z2, Z5) to be deleted have been deleted successfully; if the monitoring unit has monitored that all of the connections have been deleted successfully, the connection control unit sending the information that deletion of the multicast service receiving ends has succeeded to the multicast service sending end.

16. The connection controller according to claim 14, wherein if the monitoring unit (1016) has monitored that the establishments of part of the connections failed, the connection control unit determining whether the successfully deleting of part of the connections are allowed according to the multicast service connection control strategy;
if the successfully deleting of part of the connections are allowed, the connection control unit sending the information that deletion of part of the multicast service receiving ends have succeeded to the multicast service sending end;
if the successfully deleting of part of the connections are not allowed:
the connection control unit sending the information that deletion of the multicast service receiving ends have failed to the multicast service sending end, and
reestablishing the connections which have been deleted.

17. A route controller for a multicast service connection in automatic switched optical network, the device comprising:
a receiving unit (1102) for receiving a multicast route inquiry request from a connection controller (102);
an inquiring unit (1104) for inquiring a routing database to acquire multicast route inquiry results; and
a sending unit (1106) for sending the multicast route inquiry results to the connection controller (102);
wherein the inquiring unit (1104) is adapted for inquiring the routing database in terms of the principle that the multicast service should share connection resources; if the route controller inquiring the routing database failed, sending the fail information to the connection controller; wherein the inquiring unit is adapted for inquiring the routing database in terms of the principle that the connections to at least one increased receiving end should share an existing multicast tree resource.

18. A computer program product for establishing multicast service connections or for increasing multicast service receiving ends in an automated switched optical network, which computer program product comprises instructions for causing a processor to perform the steps of:
sending (300, 500) a request for establishing a multicast service for a plurality of multicast service receiving ends (Z1-Z4) or for increasing at least one multicast service receiving end (Z5), respectively from a multicast service sending end (A) to a connection controller (102);
generating (304, 504) a multicast route inquiry request according to the multicast service sending end (A) and the plurality of multicast service receiving ends (Z1-Z4) in the request for establishing the multicast service or according to the multicast service sending end and the increased at least one multicast service receiving ends in the request for increasing at least one multicast service receiving end (Z5), respectively, the multicast route inquiry request comprising the multicast service sending end (A) and either the plurality of multicast service receiving ends (Z1-Z4) or the increased at least one multicast service receiving end (Z5), respectively, and the service type of the request being identified as multicast;
sending (306, 506) the multicast route inquiry request to a route controller (104);
inquiring (308, 508) a routing database (106) according to the multicast route inquiry request on the route controller to acquire multicast route inquiry results;
transferring the multicast route inquiry results to the connection controller (102);
and
establishing (312, 512) connections of the multicast service sending end to each of the plurality of multicast service receiving ends (Z1-Z4) or to each of the increased at least one multicast service receiving ends (Z5), respectively, in turn according to the inquired multicast route inquiry results,
wherein the step of inquiring (308, 508) the routing database (106) comprises inquiring the routing database in terms of the principle that the multicast service should share connection resources; if the step of inquiring the routing database failed, sending the fail information to the connection controller (102); wherein the step of inquiring (308, 508) the routing database comprising inquiring the routing database in terms of the principle that the connection to at least one increased receiving end should share an existing multicast tree resource.

19. A computer program product according to claim 18, which computer program product further comprises instructions for causing a processor to perform the steps of:
sending (800) a request for deleting at least one multicast service receiving ends (Z2, Z5) from a multicast service sending end (A) to a connection controller (102); and
starting (804) the deletion of the connections of the multicast service sending end to each of the at least one multicast service receiving ends to be deleted in turn according to the request for deleting the at least one multicast service receiving ends (Z2, Z5), in terms of the principle that the normal operation of a primary multicast service connection is not affected.

## Patentansprüche

1. Verfahren zum Einrichten von Multicast-Dienstverbindungen oder zum Vermehren von empfangenden Enden des Multicast-Dienstes in einem automatisch vermittelten optischen Netz, das Verfahren umfassend folgende Schritte:
Senden (300, 500) einer Anfrage zum Einrichten eines Multicast-Dienstes für mehrere empfangende Enden (Z1-Z4) des Multicast-Dienstes bzw. zum Vermehren von mindestens einem empfangenden Ende (Z5) des Multicast-Dienstes von einem sendenden Ende (A) des Multicast-Dienstes an eine Verbindungssteuerung (102);
Erzeugen (304, 504) einer Multicast-Routenabfrageanfrage gemäß dem sendenden Ende (A) des Multicast-Dienstes und den mehreren empfangenden Enden (Z1-Z4) des Multicast-Dienstes in der Anfrage zum Einrichten des Multicast-Dienstes oder gemäß dem sendenden Ende des Multicast-Dienstes-Sendeende und dem vermehrten mindestens einen der empfangenden Enden des Multicast-Dienstes in der Anfrage zum Vermehren von jeweils mindestens einem empfangenden Ende (Z5) des Multicast-Dienstes, welche Multicast-Routenabfrageanfrage das sendende Ende (A) des Multicast-Dienstes und entweder die mehreren empfangenden Enden (Z1-Z4) des Multicast-Dienstes bzw. das vermehrte mindestens eine der empfangenden Enden (Z5) des Multicast-Dienstes umfasst und die Dienstart der Anfrage als Multicast identifiziert wird;
Senden (306, 506) der Multicast-Routenabfrageanfrage an eine Routensteuerung (104);
Abfragen (308, 508) einer Routing-Datenbank (106) gemäß der Multicast-Routenabfrageanfrage auf der Routensteuerung zum Erlangen von Multicast-Routenabfrageergebnissen;
Übertragen der Multicast-Routenabfrageergebnisse an die Verbindungssteuerung (102);
und
Einrichten (312, 512), durch die Verbindungssteuerung (102), von Verbindungen des sendenden Endes des Multicast-Dienstes mit jedem der mehreren empfangenden Enden (Z1-Z4) des Multicast-Dienstes bzw. mit jedem der vermehrten mindestens einen empfangenden Enden (Z5) des Multicast-Dienstes, wiederum gemäß den angefragten Multicast-Routenabfrageergebnissen,
wobei der Schritt des Abfragens (308, 508) der Routing-Datenbank (106) das Abfragen der Routing-Datenbank im Sinne des Prinzips, dass der Multicast-Dienst Verbindungsressourcen teilen sollte, umfasst; wenn der Schritt des Abfragens der Routing-Datenbank fehlgeschlagen ist, das Senden der Fehlschlaginformation an die Verbindungssteuerung (102); wobei der Schritt des Abfragens (308, 508) der Routing-Datenbank das Abfragen der Routing-Datenbank im Sinne des Prinzips, dass die Verbindung zu mindestens einem vermehrten empfangenden Ende eine existierende Multicast-Baumressource teilen sollte, umfasst.

2. Verfahren nach Anspruch 1, wobei die Anrufsteuerung (108) des sendenden Endes (A) des Multicast-Dienstes den Schritt durchführt, die Anfrage zum Einrichten des Multicast-Dienstes bzw. zum Vermehren des empfangenden Endes des Multicast-Dienstes von dem sendenden Ende des Multicast-Dienstes an die Verbindungssteuerung (102) zu senden.

3. Verfahren nach Anspruch 1, wobei der Schritt des Einrichtens (312, 512) der Verbindungen des sendenden Endes des Multicast-Dienstes zu jedem der mehreren empfangenden Enden (Z1-Z4) des Multicast-Dienstes bzw. dem mindestens einen vermehrten empfangenden Ende (Z5) des Multicast-Dienstes wiederum Folgendes umfasst:
Durchführen von Anrufverhandlung mit anderen Anrufsteuerungen in dem automatisch vermittelten optischen Netz auf der Basis der Anruf-ID des eingerichteten Multicast-Dienstes, und
Zuweisen einer Verbindungs-ID für jede der Verbindungen bzw. für jede der mindestens einen vermehrten Verbindungen auf der Basis der Anruf-ID nach erfolgreicher Anrufverhandlung, wobei jede der Verbindungen als Multicast- Zuordnung identifiziert wird.

4. Verfahren nach Anspruch 3, wobei der Schritt des Einrichtens (312, 512) von Verbindungen des sendenden Endes des Multicast-Dienstes zu jedem der mehreren empfangenden Enden (Z1-Z4) des Multicast-Dienstes wiederum Folgendes umfasst:
Zuweisen einer Anruf-ID für die Anfrage zum Einrichten des Multicast-Dienstes.

5. Verfahren nach Anspruch 1, ferner umfassend folgende Schritte:
Überwachen (314, 514), ob die Verbindungen des sendenden Endes des Multicast-Dienstes zu den mehreren empfangenden Enden (Z1-Z4) des Multicast-Dienstes bzw. zu dem vermehrten mindestens einen empfangenden Ende (Z5) des Multicast-Dienstes erfolgreich eingerichtet wurden;
wenn alle Verbindungen erfolgreich eingerichtet wurden, das Senden (324, 524) der Information, dass die Multicast-Dienstverbindungseinrichtung bzw. das Vermehren der empfangenden Enden des Multicast-Dienstes erfolgreich war, an das sendende Ende (A) des Multicast-Dienstes;
wenn die Einrichtung eines Teils der Verbindungen fehlgeschlagen ist, das Bestimmen (316, 516), ob ein Teil erfolgreicher Verbindungen gemäß der Verbindungssteuerungsstrategie des Multicast-Dienstes erlaubt ist;
wenn ein Teil erfolgreicher Verbindungen erlaubt ist, das Senden (322, 522) von Information, dass die Einrichtung eines Teils der Verbindungen bzw. das Vermehren eines Teils der empfangenden Enden des Multicast-Dienstes erfolgreich war, an das sendende Ende des Multicast-Dienstes;
wenn die erfolgreiche Einrichtung eines Teils der Verbindungen nicht erlaubt ist:
das Senden (318, 518) von Information, dass die Multicast-Dienstverbindungseinrichtung bzw. das Vermehren der empfangenden Enden des Multicast-Dienstes fehlgeschlagen ist, an das sendende Ende des Multicast-Dienstes, und
das Beseitigen (320, 520) der Verbindungen, die erfolgreich eingerichtet wurden.

6. Verfahren nach Anspruch 1, das Verfahren ferner umfassend:
das Senden (800) einer Anfrage zum Löschen von mindestens einem der empfangenden Enden (Z2, Z5) des Multicast-Dienstes von einem sendenden Ende (A) des Multicast-Dienstes an eine Verbindungssteuerung (102); und
das Beginnen (804) des Löschens der Verbindungen des sendenden Endes des Multicast-Dienstes mit jedem des mindestens einen der zu löschenden empfangenden Enden des Multicast-Dienstes, wiederum gemäß der Anfrage zum Löschen des mindestens einen der empfangenden Enden (Z2, Z5) des Multicast-Dienstes im Sinne des Prinzips, dass der normale Betrieb einer primären Multicast-Dienstverbindung nicht beeinträchtigt wird.

7. Verfahren nach Anspruch 6, wobei die Anrufsteuerung (108) des sendenden Endes des (A) Multicast-Dienstes den Schritt durchführt, die Anfrage zum Löschen von empfangenden Enden des Multicast-Dienstes von einem sendenden Ende des Multicast-Dienstes an die Verbindungssteuerung (102) zu senden.

8. Verfahren nach Anspruch 6, ferner umfassend folgende Schritte:
Überwachen (806), ob die Verbindungen des sendenden Endes (A) des Multicast-Dienstes mit dem zu löschenden mindestens einen der zu löschenden empfangenden Enden (Z2, Z5) des Multicast-Dienstes erfolgreich gelöscht wurden;
wenn alle Verbindungen erfolgreich gelöscht wurden, das Senden (816) einer Information, dass das Löschen der empfangenden Enden des Multicast-Dienstes erfolgreich war, an das sendende Ende des Multicast-Dienstes;
wenn mindestens eine der Löschungen fehlgeschlagen ist, das Bestimmen (808), ob der Teil der erfolgreichen Löschung gemäß der Verbindungssteuerungsstrategie des Multicast-Dienstes erlaubt ist;
wenn der Teil der erfolgreichen Löschung erlaubt ist, das Senden (814) der Information, dass die Löschung des Teils der empfangenden Enden des Multicast-Dienstes erfolgreich war, an das sendende Ende des Multicast-Dienstes;
wenn das Löschen des Teils der Verbindungen nicht erlaubt ist:
das Senden (810) von Information, dass das Löschen der empfangenden Enden des Multicast-Dienstes fehlgeschlagen ist, an das sendende Ende des Multicast-Dienstes, und
die Wiederherstellung (812) der Verbindungen, die gelöscht wurden.

9. Verbindungssteuerung für Multicast-Dienstverbindungen in automatisch vermittelten optischen Netzen, die Vorrichtung umfassend:
eine Multicast-Dienst-Anfrageempfangseinheit (1002) zum Empfangen einer Anfrage zum Einrichten eines Multicast-Dienstes, welche Anfrage zum Einrichten des Multicast-Dienstes ein sendendes Ende (A) des Multicast-Dienstes und mehrere empfangenden Enden (Z1-Z4) des Multicast-Dienstes umfasst, oder zum Empfangen einer Anfrage zum Vermehren von empfangenden Enden des Multicast-Dienstes, welche Anfrage zum Vermehren von empfangenden Enden des Multicast-Dienstes ein sendendes Ende des Multicast-Dienstes und mindestens ein empfangendes Ende (Z5) des Multicast-Dienstes umfasst;
eine Multicast-Routenabfrage-Anfrageerzeugungseinheit (1004) zum Erzeugen einer Multicast-Routenabfrageanfrage gemäß dem sendenden Ende des Multicast-Dienstes und der mehreren empfangenden Enden des Multicast-Dienstes in der Anfrage zum Einrichten des Multicast-Dienstes oder gemäß dem sendenden Ende des Multicast-Dienstes und dem vermehrten mindestens einen der empfangenden Enden des Multicast-Dienstes in der Anfrage zum Vermehren von empfangenden Enden des Multicast-Dienstes;
eine Sendeeinheit (1006) zum Senden der Multicast-Routenabfrageanfrage an eine Routensteuerung (104), wobei die Routensteuerung (104) die Routing-Datenbank im Sinne des Prinzips abfragt, dass der Multicast-Dienst Verbindungsressourcen teilen sollte, falls die Abfrage der Routing-Datenbank durch die Routensteuerung fehlschlägt, das Senden der Fehlschlaginformation an die Verbindungssteuerung, und wobei die Routensteuerung die Routing-Datenbank im Sinne des Prinzips abfragt, dass die Verbindung mit mindestens einem vermehrten empfangenden Ende eine existierende Multicast-Baumressource teilen sollte;
eine Empfangseinheit (1008) zum Empfangen von Multicast-Routenabfrageergebnisse von der Routensteuerung (104); und
eine Verbindungseinheit (1010) zum Einrichten der Verbindungen des sendenden Endes des Multicast-Dienstes mit jedem der mehreren empfangenden Enden (Z1-Z4) des Multicast-Dienstes bzw. durch jedes des vermehrten des mindestens einen der empfangenden Enden (Z5) des Multicast-Dienstes, wiederum gemäß der abgefragten Multicast-Routenabfrageergebnisse.

10. Verbindungssteuerung nach Anspruch 9, ferner umfassend:
eine Zuweisungseinheit (1012) zum Zuweisen einer Anruf-ID für die Anfrage zum Einrichten des Multicast-Dienstes; und
eine Anrufsteuerungseinheit (1014) zum Durchführen von Anrufverhandlungen mit anderen Anrufsteuerungseinheiten in automatisch vermittelten optischen Netzen auf der Basis der Anruf-ID.

11. Verbindungssteuerung nach Anspruch 10, wobei die Zuweisungseinheit (1012) ferner verwendet wird, um eine Verbindungs-ID für jede der Verbindungen auf der Basis der Anruf-ID nach erfolgreichen Anrufverhandlungen zuzuweisen, wo jede der Verbindungen als eine Multicast-Zuordnung identifiziert wird.

12. Verbindungssteuerung nach Anspruch 9, ferner umfassend eine Überwachungseinheit (1016) zum Überwachen, ob die Verbindungen des sendenden Endes des Multicast-Dienstes mit jedem der mehreren empfangenden Enden des Multicast-Dienstes erfolgreich eingerichtet wurden; wobei, wenn die Überwachungseinheit beobachtet hat, dass Einrichtungen aller Verbindungen erfolgreich waren, das Senden durch die Verbindungseinheit der Information, dass die Multicast-Dienstverbindungseinrichtung erfolgreich war, an das sendende Ende des Multicast-Dienstes.

13. Verbindungssteuerung nach Anspruch 9, wobei, wenn die Überwachungseinheit (1016) beobachtet hat, dass ein Teil der Einrichtungen von Verbindungen fehlgeschlagen ist, das Bestimmen durch die Verbindungseinheit, ob ein Teil der erfolgreichen Verbindungen gemäß der Verbindungssteuerungsstrategie des Multicast-Dienstes erlaubt ist;
wenn die erfolgreiche Einrichtung eines Teils der Verbindungen erlaubt ist, das Senden durch die Verbindungssteuerungseinheit der Information, dass die Einrichtung eines Teils der Multicast-Dienstverbindungen bzw. dass das Vermehren eines Teils der empfangenden Enden des Multicast-Dienstes erfolgreich war, an das sendende Ende des Multicast-Dienstes;
wenn die erfolgreiche Einrichtung eines Teils der Verbindungen nicht erlaubt ist:
das Senden durch die Verbindungssteuerungseinheit der Information, dass die Einrichtung der Multicast-Dienstverbindungen bzw. dass das Vermehren der empfangenden Enden des Multicast-Dienstes fehlgeschlagen ist, an das sendende Ende des Multicast-Dienstes, und
das Beseitigen der Verbindungen, die erfolgreich eingerichtet wurden.

14. Verbindungssteuerung nach Anspruch 9, ferner umfassend:
eine Multicast-Dienstanfrageempfangseinheit (1002) zum Empfangen einer Anfrage zum Löschen von empfangenden Enden des Multicast-Dienstes, welche Anfrage zum Löschen der empfangenden Enden des Multicast-Dienstes ein sendendes Ende (A) des Multicast-Dienstes und mindestens ein zu löschendes empfangendes Ende (Z2, Z5) des Multicast-Dienstes umfasst; und
eine Verbindungssteuerungseinheit (1010) zum Löschen der Verbindungen des sendendenden Endes des Multicast-Dienstes mit jedem des mindestens einen der empfangenden Enden (Z2, Z5) des Multicast-Dienstes, die nacheinander gelöscht werden sollen.

15. Verbindungssteuerung nach Anspruch 14, ferner umfassend eine Überwachungseinheit (1016) zum Überwachen, ob die Verbindungen des sendenden Endes des Multicast-Dienstes zu jedem des mindestens einen der zu löschenden empfangenden Enden (Z2, Z5) des Multicast-Dienstes erfolgreich gelöscht wurden; wenn die Überwachungseinheit beobachtet hat, dass alle der Verbindungen erfolgreich gelöscht wurden, das Senden durch die Verbindungssteuerungseinheit der Information, dass das Löschen der empfangenden Enden des Multicast-Dienstes erfolgreich war, an das sendende Ende des Multicast-Dienstes.

16. Verbindungssteuerung nach Anspruch 14, wobei, wenn die Überwachungseinheit (1016) beobachtet hat, dass die Einrichtungen von einem Teil der Verbindungen fehlgeschlagen ist, das Bestimmen durch die Verbindungssteuerungseinheit, ob das erfolgreiche Löschen des Teils der Verbindungen gemäß der Verbindungssteuerungsstrategie des Multicast-Dienstes erlaubt ist;
wenn das erfolgreiche Löschen des Teils der Verbindungen erlaubt ist, das Senden durch die Verbindungssteuerungseinheit der Information, dass das Löschen des Teils der empfangenden Enden des Multicast-Dienstes erfolgreich war, an das sendende Ende des Multicast-Dienstes;
wenn das erfolgreiche Löschen des Teils der Verbindungen nicht erlaubt ist:
das Senden durch die Verbindungssteuerungseinheit der Information, dass das Löschen der empfangenden Enden des Multicast-Dienstes fehlgeschlagen ist, an das sendende Ende des Multicast-Dienstes, und
das Wiederherstellen der Verbindungen, die gelöscht wurden.

17. Routensteuerung für eine Multicast-Dienstverbindung in automatisch vermittelten optischen Netzen, die Vorrichtung umfassend:
eine Empfangseinheit (1102) zum Empfangen einer Multicast-Routenabfrageanfrage von einer Verbindungssteuerung (102);
eine Abfrageeinheit (1104) zum Abfragen einer Routing-Datenbank zum Erlangen von Multicast-Routenabfrageergebnisse; und
eine Sendeeinheit (1106) zum Senden der Multicast-Routenabfrageergebnisse an die Verbindungssteuerung (102);
wobei die Abfrageeinheit (1104) angepasst ist zum Abfragen der Routing-Datenbank im Sinne des Prinzips, dass der Multicast-Dienst Verbindungsressourcen teilen sollte; wenn das Abfragen der Routing-Datenbank durch die Routensteuerung fehlgeschlagen ist, das Senden der Fehlschlaginformation an die Verbindungssteuerung; wobei die Abfrageeinheit angepasst ist zum Abfragen der Routing-Datenbank im Sinne des Prinzips, dass die Verbindungen mit mindestens einem vermehrten empfangenden Ende eine existierende Multicast-Baumressource teilen sollte.

18. Computerprogrammprodukt zum Einrichten von Multicast-Dienstverbindungen oder zum Vermehren von empfangenden Enden des Multicast-Dienstes in einem automatisch vermittelten optischen Netz, welches Computerprogrammprodukt Befehle umfasst, um einen Prozessor zum Ausführen folgender Schritte zu veranlassen:
Senden (300, 500) einer Anfrage zum Einrichten eines Multicast-Dienstes für mehrere empfangende Enden (Z1-Z4) des Multicast-Dienstes bzw. zum Vermehren von mindestens einem empfangenden Ende (Z5) des Multicast-Dienstes von einem sendenden Ende (A) des Multicast-Dienstes an eine Verbindungssteuerung (102);
Erzeugen (304, 504) einer Multicast-Routenabfrageanfrage gemäß dem sendenden Ende (A) des Multicast-Dienstes und den mehreren empfangenden Enden (Z1-Z4) des Multicast-Dienstes in der Anfrage zum Einrichten des Multicast-Dienstes oder gemäß dem sendenden Ende des Multicast-Dienstes bzw. dem vermehrten mindestens einen der empfangenden Enden des Multicast-Dienstes in der Anfrage zum Vermehren von mindestens einem empfangenden Ende (Z5) des Multicast-Dienstes, welche Multicast-Routenabfrageanfrage das sendende Ende (A) des Multicast-Dienstes und entweder die mehreren empfangenden Enden (Z1-Z4) des Multicast-Dienstes oder das vermehrte mindestens eine empfangende Ende (Z5) des Multicast-Dienstes umfasst und die Dienstart der Anfrage als Multicast identifiziert wird;
Senden (306, 506) der Multicast-Routenabfrageanfrage an eine Routensteuerung (104);
Abfragen (308, 508) einer Routing-Datenbank (106) gemäß der Multicast-Routenabfrageanfrage auf der Routensteuerung zum Erlangen von Multicast-Routenabfrageergebnissen;
Übertragen der Multicast-Routenabfrageergebnisse an die Verbindungssteuerung (102);
und
Einrichten (312, 512) von Verbindungen des sendenden Endes des Multicast-Dienstes mit jedem der mehreren empfangenden Enden (Z1-Z4) des Multicast-Dienstes bzw. mit jedem des vermehrten mindestens einen der empfangenden Enden (Z5) des Multicast-Dienstes, wiederum gemäß den abgefragten Multicast-Routenabfrageergebnissen,
wobei der Schritt des Abfragens (308, 508) der Routing-Datenbank (106) das Abfragen der Routing-Datenbank im Sinne des Prinzips umfasst, dass der Multicast-Dienst Verbindungsressourcen teilen sollte; wenn der Schritt des Abfragens der Routing-Datenbank fehlgeschlagen ist, das Senden der Fehlschlaginformation an die Verbindungssteuerung (102); wobei der Schritt des Abfragens (308, 508) der Routing-Datenbank das Abfragen der Rouring-Datenbank im Sinne des Prinzips umfasst, dass die Verbindung zu mindestens einem empfangenden Ende eine existierende Multicast-Baumressource teilen sollte.

19. Computerprogrammprodukt nach Anspruch 18, welches Computerprogrammprodukt ferner Befehle umfasst, um einen Prozessor zu veranlassen, folgende Schritte auszuführen:
Senden (800) einer Anfrage zum Löschen von mindestens einem der empfangenden Enden (Z2, Z5) des Multicast-Dienstes von einem sendenden Ende (A) des Multicast-Dienstes an eine Verbindungssteuerung (102); und
Beginnen (804) des Löschens der Verbindungen des sendenden Endes des Multicast-Dienstes mit jedem des mindestens einen der zu löschenden empfangenden Enden des Multicast-Dienstes, wiederum gemäß der Anfrage zum Löschen des mindestens einen der empfangenden Enden (Z2, Z5) des Multicast-Dienstes im Sinne des Prinzips, dass der normale Betrieb einer primären Multicast-Dienstverbindung nicht beeinträchtigt wird.

## Revendications

1. Procédé pour établir des connexions de service de multidiffusion ou pour la réception de service de multidiffusion dans un réseau optique à commutation automatique, le procédé comprenant les étapes consistant à :
envoyer (300, 500) une requête pour établir un service de multidiffusion pour une pluralité de réceptions de service de multidiffusion (Z1-Z4) ou pour augmenter au moins une réception de service de multidiffusion (Z5), de manière respective, depuis une l'émission de service de multidiffusion (A) jusqu'à un contrôleur de connexion (102) ;
générer (304, 504) une requête d'interrogation de voie de multidiffusion conformément à l'émission de service de multidiffusion (A) et à la pluralité de réceptions de service de multidiffusion (Z1-Z4) dans la requête pour établir le service de multidiffusion ou conformément à l'émission de service de multidiffusion et au moins une réception de service de multidiffusion augmentée dans la requête pour augmenter au moins une réception de service de multidiffusion (Z5), de manière respective, la requête d'interrogation de voie de multidiffusion comprenant l'émission de service de multidiffusion (A) et soit la pluralité de réception de service de multidiffusion (Z1-Z4), soit l'au moins une réception de service de multidiffusion augmentée (Z5), de manière respective, et le type de service de la requête qui est identifié en tant que multidiffusion ;
envoyer (306, 506) la requête d'interrogation de voie de multidiffusion à un contrôleur de voie (104) ;
interroger (308, 508) une base de données de voies/routage (106) conformément à la requête d'interrogation de voie de multidiffusion sur le contrôleur de voie de manière à acquérir des résultats d'interrogation de voie de multidiffusion ;
transférer les résultats d'interrogation de voie de multidiffusion au contrôleur de connexion (102) ; et
établir (312, 512), au moyen du contrôleur de connexion (102), des connexions de l'émission de service de multidiffusion sur chacune de la pluralité de réceptions de service de multidiffusion (Z1-Z4) ou sur chacune des au moins une réception de service de multidiffusion augmentée (Z5), de manière respective, tour à tour conformément aux résultats d'interrogation de voie de multidiffusion sous interrogation, dans lequel :
l'étape d'interrogation (308, 508) de la base de données de routage (106) comprend l'interrogation de la base de données de routage du point de vue du principe consistant en ce que le service de multidiffusion doit partager des ressources de connexion : si l'étape d'interrogation de la base de données de routage est en échec, envoyer l'information d'échec sur le contrôleur de connexion (102) ; dans lequel l'étape d'interrogation (308, 508) de la base de données de routage comprend l'interrogation de la base de données de routage du point de vue du principe consistant en ce que la connexion sur au moins une réception de service de multidiffusion augmentée doit partager une ressource arborescente de multidiffusion existante.

2. Procédé selon la revendication 1, dans lequel le contrôleur d'appel (108) de l'émission de service de multidiffusion (A) réalise l'étape consistant à envoyer la requête pour établir le service de multidiffusion ou pour augmenter une réception de service de multidiffusion, de manière respective, depuis l'émission de service de multidiffusion jusqu'au contrôleur de connexion (102).

3. Procédé selon la revendication 1, dans lequel l'étape d'établissement (312, 512) des connexions de l'émission de service de multidiffusion sur chacune de la pluralité de réception de service de multidiffusion (Z1-Z4) ou de l'au moins une réception de service de multidiffusion augmentée (Z5), de manière respective, tour à tour comprenant :
la réalisation d'une négociation d'appel avec d'autres contrôleurs d'appel dans le réseau optique à commutation automatique sur la base de l'identificateur ou ID d'appel du service de multidiffusion établi ; et
l'assignation d'un ID de connexion pour chacune des connexions ou pour chacune des au moins une connexion augmentée, de manière respective, sur la base de l'ID d'appel après que les négociations d'appel sont couronnées de succès, dans lequel chacune des connexions est identifiée en tant qu'attribution de multidiffusion.

4. Procédé selon la revendication 3, dans lequel l'étape d'établissement (312, 512) de connexions d'émission de service de multidiffusion sur chacune de la pluralité de réceptions de service de multidiffusion (Z1-Z4) tour à tour comprend :
l'assignation d'un ID d'appel pour la requête pour établir le service de multidiffusion.

5. Procédé selon la revendication 1, comprenant en outre les étapes consistant à :
surveiller (314, 514) si oui ou non les connexions de l'émission de service de multidiffusion sur la pluralité de réception de service de multidiffusion (Z1-Z4) ou sur l'au moins une réception de service de multidiffusion augmentée (Z5), de manière respective, ont été établies avec succès ;
si toutes les connexions ont été établies avec succès, envoyer (324, 524) l'information consistant en ce que l'établissement de connexions de service de multidiffusion ou en ce que l'augmentation des réceptions de service de multidiffusion, de manière respective, a été couronné(e) de succès à l'émission de service de multidiffusion (A) ;
si les connexions d'une partie des connexions sont en échec pour être établies, déterminer (316, 516) si oui ou non les connexions de la partie des connexions couronnées de succès sont autorisées conformément à la stratégie de commande de connexions de service de multidiffusion ;
si les connexions d'une partie des connexions couronnées de succès sont autorisées, envoyer (322, 522) l'information consistant en ce que l'établissement d'une partie des connexions ou l'augmentation d'une partie des réceptions de service de multidiffusion, de manière respective, a été couronné(e) de succès à l'émission de service de multidiffusion ;
si l'établissement couronné de succès d'une partie des connexions n'est pas autorisé :
envoyer (318, 518) l'information consistant en ce que l'établissement de connexions de service de multidiffusion ou l'augmentation des réceptions de service de multidiffusion, de manière respective, est en échec à l'émission de service de multidiffusion ; et
éliminer (320, 520) les connexions qui ont été établies avec succès.

6. Procédé selon la revendication 1, le procédé comprenant en outre :
l'envoi (800) d'une requête pour supprimer au moins une réception de service de multidiffusion (Z2, Z5) depuis une émission de service de multidiffusion (A) jusqu'à un contrôleur de connexion (102) ; et
le démarrage (804) de la suppression des connexions de l'émission de service de multidiffusion sur chacune des au moins une réception de service de multidiffusion, lesquelles sont destinées à être supprimées, tour à tour conformément à la requête pour supprimer les au moins une réception de service de multidiffusion (Z2, Z5), du point de vue du principe consistant en ce que le fonctionnement normal d'une connexion de service de multidiffusion primaire n'est pas affecté.

7. Procédé selon la revendication 6, dans lequel le contrôleur d'appel (108) de l'émission de service de multidiffusion (A) réalise l'étape consistant à envoyer la requête pour supprimer des extrémités de réception de service de multidiffusion depuis une émission de service de multidiffusion jusqu'au contrôleur de connexion (102).

8. Procédé selon la revendication 6, comprenant en outre les étapes consistant à :
surveiller (806) si oui ou non les connexions de l'émission de service de multidiffusion (A) sur les au moins une réception de service de multidiffusion (Z2, Z5), lesquelles sont destinées à être supprimées, ont été supprimées avec succès ;
si toutes les connexions ont été supprimées avec succès, envoyer (816) une information consistant en ce que la suppression des extrémités de réception de service de multidiffusion a été couronnée de succès à l'émission de service de multidiffusion ;
si au moins l'une des suppressions est en échec, déterminer (808) si oui ou non la partie de suppression couronnée de succès est autorisée conformément à la stratégie de commande de connexions de service de multidiffusion ;
si la partie de suppression couronnée de succès est autorisée, envoyer (814) l'information consistant en ce que la suppression d'une partie des extrémités de réception de service de multidiffusion a été couronnée de succès à l'émission de service de multidiffusion ;
si la suppression d'une partie des connexions n'est pas autorisée :
envoyer (810) l'information consistant en ce que la suppression des extrémités de réception de service de multidiffusion est en échec à l'émission de service de multidiffusion ; et
rétablir (812) les connexions qui ont été supprimées.

9. Contrôleur de connexion pour des connexions de service de multidiffusion dans un réseau optique à commutation automatique, le dispositif comprenant :
une unité de réception de requête de service de multidiffusion (1002) pour recevoir une requête pour établir un service de multidiffusion, la requête pour établir le service de multidiffusion comprenant une émission de service de multidiffusion (A) et une pluralité d'extrémités de réception de service de multidiffusion (Z1-Z4), ou pour recevoir une requête pour augmenter des extrémités de réception de service de multidiffusion, la requête pour augmenter des extrémités de réception de service de multidiffusion comprenant une émission de service de multidiffusion et au moins une réception de service de multidiffusion (Z5) ;
une unité de génération de requête d'interrogation de voie de multidiffusion (1004) pour générer une requête d'interrogation de voie de multidiffusion conformément à l'émission de service de multidiffusion et à la pluralité d'extrémités de réception de service de multidiffusion dans la requête pour établir le service de multidiffusion ou conformément à l'émission de service de multidiffusion et aux au moins une réception de service de multidiffusion dans la requête pour augmenter des extrémités de réception de service de multidiffusion ;
une unité d'envoi (1006) pour envoyer la requête d'interrogation de voie de multidiffusion à un contrôleur de voie (104), dans lequel le contrôleur de voie (104) interroge la base de données de routage du point de vue du principe consistant en ce que le service de multidiffusion doit partager des ressources de connexion, si le contrôleur de voie qui interroge la base de données de routage est en échec, pour envoyer l'information d'échec sur le contrôleur de connexion et dans lequel le contrôleur de voie interroge la base de données de routage du point de vue du principe consistant en ce que la connexion sur au moins une réception augmentée doit partager une ressource arborescente de multidiffusion existante ;
une unité de réception (1008) pour recevoir des résultats d'interrogation de voie de multidiffusion qui proviennent du contrôleur de voie (104) ; et
une unité de commande de connexion (1010) pour établir les connexions de l'émission de service de multidiffusion sur chacune des multiples extrémités de réception de service de multidiffusion (Z1-Z4) ou par l'intermédiaire de chacune des au moins une réception de service de multidiffusion augmentée (Z5), de manière respective, tour à tour conformément aux résultats d'interrogation de voie de multidiffusion sous interrogation.

10. Contrôleur de connexion selon la revendication 9, comprenant en outre :
une unité d'assignation (1012) pour assigner un ID d'appel pour la requête pour établir le service de multidiffusion ; et
une unité de commande d'appel (1014) pour réaliser des négociations d'appel avec d'autres unités de commande d'appel dans un réseau optique à commutation automatique sur la base de l'ID d'appel.

11. Contrôleur de connexion selon la revendication 10, dans lequel l'unité d'assignation (1012) est en outre utilisée pour assigner un ID de connexion pour chacune de connexions sur la base de l'ID d'appel après que les négociations d'appel ont été couronnées de succès, dans lequel chacune des connexions est identifiée en tant qu'attribution de multidiffusion.

12. Contrôleur de connexion selon la revendication 9, comprenant en outre une unité de surveillance (1016) pour surveiller si oui ou non les connexions de l'émission de service de multidiffusion sur chacune de la pluralité d'extrémités de réception de service de multidiffusion ont été établies avec succès, dans lequel, si l'unité de surveillance a constaté que des établissements de toutes les connexions ont été couronnés de succès, l'unité de commande de connexion envoie d'information consistant en ce que l'établissement de connexions de service de multidiffusion a été couronné de succès à l'émission de service de multidiffusion.

13. Contrôleur de connexion selon la revendication 9, dans lequel, si l'unité de surveillance (1016) a constaté qu'une partie des établissements des connexions est en échec, l'unité de commande de connexion détermine si oui ou non une partie des connexions couronnées de succès est autorisée conformément à la stratégie de commande de connexions de service de multidiffusion ;
si l'établissement couronné de succès d'une partie des connexions est autorisé, l'unité de commande de connexion envoie l'information consistant en ce que l'établissement d'une partie des connexions de service de multidiffusion ou en ce que l'augmentation d'une partie des extrémités de réception de service de multidiffusion, de manière respective, a été couronné(e) de succès à l'émission de service de multidiffusion ;
si l'établissement couronné de succès d'une partie des connexions n'est pas autorisé :
l'unité de commande de connexion envoie l'information consistant en ce que l'établissement de connexions de service de multidiffusion ou en ce que l'augmentation des extrémités de réception de service de multidiffusion, de manière respective, est en échec à l'émission de service de multidiffusion ; et
elle élimine les connexions qui ont été établies avec succès.

14. Contrôleur de connexion selon la revendication 9, comprenant en outre :
une unité de réception de requête de service de multidiffusion (1002) pour recevoir une requête pour supprimer des extrémités de réception de service de multidiffusion, la requête pour supprimer des extrémités de réception de service de multidiffusion comprenant une émission de service de multidiffusion (A) et au moins une réception de service de multidiffusion à supprimer (Z2, Z5) ; et
une unité de commande de connexion (1010) pour supprimer les connexions de l'émission de service de multidiffusion sur chacune des au moins une réception de service de multidiffusion (Z2, Z5), lesquelles sont destinées à être supprimées tour à tour.

15. Contrôleur de connexion selon la revendication 14, comprenant en outre une unité de surveillance (1016) pour surveiller si oui ou non les connexions de l'émission de service de multidiffusion sur chacune des au moins une réception de service de multidiffusion (Z2, Z5), lesquelles sont destinées à être supprimées, ont été supprimées avec succès : si l'unité de surveillance a constaté que toutes les connexions ont été supprimées avec succès, l'unité de commande de connexion envoie l'information consistant en ce que la suppression des extrémités de réception de service de multidiffusion a été couronnée de succès à l'émission de service de multidiffusion.

16. Contrôleur de connexion selon la revendication 14, dans lequel, si l'unité de surveillance (1016) a constaté que les établissements d'une partie des connexions sont en échec, l'unité de commande de connexion détermine si oui ou non la suppression couronnée de succès d'une partie des connexions est autorisée conformément à la stratégie de commande de connexions de service de multidiffusion ;
si la suppression couronnée de succès d'une partie des connexions est autorisée, l'unité de commande de connexion envoie l'information consistant en ce que la suppression d'une partie des extrémités de réception de service de multidiffusion est couronnée de succès à l'émission de service de multidiffusion ;
si la suppression couronnée de succès d'une partie des connexions n'est pas autorisée :
l'unité de commande de connexion envoie l'information consistant en ce que la suppression des extrémités de réception de service de multidiffusion est en échec à l'émission de service de multidiffusion ; et
elle rétablit les connexions qui ont été supprimées.

17. Contrôleur de voie pour une connexion de service de multidiffusion dans un réseau optique à commutation automatique, le dispositif comprenant :
une unité de réception (1102) pour recevoir une requête d'interrogation de voie de multidiffusion qui provient d'un contrôleur de connexion (102) ;
une unité d'interrogation (1104) pour interroger une base de données de routage de manière à acquérir des résultats d'interrogation de voie de multidiffusion ; et
une unité d'envoi (1106) pour envoyer les résultats d'interrogation de voie de multidiffusion au contrôleur de connexion (102) ; dans lequel :
l'unité d'interrogation (1104) est adaptée pour interroger la base de données de routage du point de vue du principe consistant en ce que le service de multidiffusion doit partager des ressources de connexion ; si le contrôleur de voie qui interroge la base de donnée de routage est en échec, l'envoi de l'information d'échec au contrôleur de connexion ; dans lequel l'unité d'interrogation est adaptée pour interroger la base de données de routage du point de vue du principe consistant en ce que les connexions sur l'au moins une réception de service de multidiffusion augmentée doivent partager une ressource arborescente de multidiffusion existante.

18. Progiciel informatique pour établir des connexions de service de multidiffusion ou pour augmenter des extrémités de réception de service de multidiffusion dans un réseau optique à commutation automatique, lequel progiciel informatique comprend des instructions pour forcer un processeur à réaliser les étapes consistant à :
envoyer (300, 500) une requête pour établir un service de multidiffusion pour une pluralité d'extrémités de réception de service de multidiffusion (Z1-Z4) ou pour augmenter au moins une réception de service de multidiffusion (Z5), de manière respective, depuis une émission de service de multidiffusion (A) jusqu'à un contrôleur de connexion (102) ;
générer (304, 504) une requête d'interrogation de voie de multidiffusion conformément à l'émission de service de multidiffusion (A) et à la pluralité d'extrémités de réception de service de multidiffusion (Z1-Z4) dans la requête pour établir le service de multidiffusion ou conformément à l'émission de service de multidiffusion et aux au moins une réception de service de multidiffusion augmentée dans la requête pour augmenter au moins une réception de service de multidiffusion (Z5), de manière respective, la requête d'interrogation de voie de multidiffusion comprenant l'émission de service de multidiffusion (A) et soit la pluralité d'extrémités de réception de service de multidiffusion (Z1-Z4), soit l'au moins une réception de service de multidiffusion augmentée (Z5), de manière respective, et le type de service de la requête qui est identifié en tant que multidiffusion ;
envoyer (306,506) la requête d'interrogation de voie de multidiffusion à un contrôleur de voie (104) ;
interroger (308, 508) une base de données de routage (106) conformément à la requête d'interrogation de voie de multidiffusion sur le contrôleur de voie de manière à acquérir des résultats d'interrogation de voie de multidiffusion ;
transférer les résultats d'interrogation de voie de multidiffusion au contrôleur de connexion (102) ; et
établir (312, 512) des connexions de l'émission de service de multidiffusion sur chacune de la pluralité d'extrémités de réception de service de multidiffusion (Z1-Z4) ou sur chacune des au moins une réception de service de multidiffusion augmentée (Z5), de manière respective, tour à tour conformément aux résultats d'interrogation de voie de multidiffusion sous interrogation, dans lequel :
l'étape d'interrogation (308, 508) de la base de données de routage (106) comprend l'interrogation de la base de données de routage du point de vue du principe consistant en ce que le service de multidiffusion doit partager des ressources de connexion : si l'étape d'interrogation de la base de données de routage est en échec, envoyer l'information d'échec sur le contrôleur de connexion (102) ; dans lequel l'étape d'interrogation (308, 508) de la base de données de routage comprend l'interrogation de la base de données de routage du point de vue du principe consistant en ce que la connexion sur au moins une réception augmentée doit partager une ressource arborescente de multidiffusion existante.

19. Progiciel informatique selon la revendication 18, lequel progiciel informatique comprend en outre des instructions pour forcer un processeur à réaliser les étapes consistant à :
envoyer (800) une requête pour supprimer au moins une réception de service de multidiffusion (Z2, Z5) depuis une émission de service de multidiffusion (A) jusqu'à un contrôleur de connexion (102) ; et
démarrer (804) la suppression des connexions de l'émission de service de multidiffusion sur chacune des au moins une réception de service de multidiffusion, lesquelles sont destinées à être supprimées, tour à tour conformément à la requête pour supprimer les au moins une réception de service de multidiffusion (Z2, Z5), du point de vue du principe consistant en ce que le fonctionnement normal d'une connexion de service de multidiffusion primaire n'est pas affecté.
